(19) Europäisches Patentamt
European Patent Office
Office européen des brevets

(11) **EP 3 140 888 B1**

(12) **FASCICULE DE BREVET EUROPEEN**

(45) Date de publication et mention
de la délivrance du brevet:
**02.10.2019 Bulletin 2019/40**

(21) Numéro de dépôt: **15724536.6**

(22) Date de dépôt: **07.05.2015**

(51) Int Cl.:
*H01S 3/08* *(2006.01)*   *H01S 3/106* *(2006.01)*

(86) Numéro de dépôt international:
**PCT/EP2015/060093**

(87) Numéro de publication internationale:
**WO 2015/169916 (12.11.2015 Gazette 2015/45)**

(54) **LASER A ETAT SOLIDE FAIBLE BRUIT**

RAUSCHARMER FESTKÖRPERLASER

LOW-NOISE SOLID-STATE LASER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.05.2014 FR 1401044**

(43) Date de publication de la demande:
**15.03.2017 Bulletin 2017/11**

(73) Titulaires:
• **THALES**
**92400 Courbevoie (FR)**
• **Université de Rennes I**
**35065 Rennes Cedex (FR)**
• **Centre National de la Recherche Scientifique (C.N.R.S.)**
**75016 Paris (FR)**

(72) Inventeurs:
• **ALOUINI, Mehdi**
**F-35140 Gosne (FR)**
• **MORVAN, Loïc**
**F-91400 Orsay (FR)**
• **PILLET, Grégoire**
**F-75013 Paris (FR)**
• **EL AMILI, Abdelkrim**
**Sand Diego, California 92117 (US)**

(74) Mandataire: **Joubert, Cécile**
**Marks & Clerk France**
**Counseils en Propriete Industrielle**
**Immeuble "Visium"**
**22, avenue Aristide Briand**
**94117 Arcueil Cedex (FR)**

(56) Documents cités:
**US-B1- 6 788 715**

• **ALOUINI M ET AL: "DUAL TUNABLE WAVELENGTH ER: YB: GLASS LASER FOR TERAHERTZ BEAT FREQUENCY GENERATION", SIGNAL PROCESSING, ELSEVIER SCIENCE PUBLISHERS B.V. AMSTERDAM, NL, vol. 10, no. 11, 1 novembre 1998 (1998-11-01), pages 1554-1556, XP001172425, ISSN: 0165-1684 cité dans la demande**

**Description**

DOMAINE DE L'INVENTION

L'invention concerne les lasers à état solide, et plus particulièrement les lasers à état solide mono et bi-fréquence pour lesquels on cherche à réduire le bruit d'intensité.

ETET DE LA TECHNIQUE

Les lasers à état solide, mono et bi-fréquence à faible bruit constituent des sources de choix pour de nombreux domaines tels que les communications optiques, la photonique microonde, la spectroscopie haute résolution et la métrologie par exemple. La plupart de ces applications nécessitent des sources lasers stables ayant de très faibles largeurs de raie mais aussi de très faibles niveaux de bruit d'intensité sur une large bande spectrale. Bien que les lasers à état solide aient l'avantage de présenter une faible largeur spectrale, ils souffrent néanmoins d'un excès de bruit d'intensité important, en particulier aux fréquences de résonance propres du laser. Un exemple de milieu actif d'un laser à état solide est une matrice cristalline ou vitreuse comprenant des ions terre rare.

La réalisation de lasers à état solide à faible bruit, qu'ils soient mono ou bi-fréquence, s'est accompagnée du développement de dispositifs et/ou d'architectures laser plus ou moins complexes, permettant de réduire les bruits d'intensité résonants. Il est à noter qu'en plus des différentes techniques utilisées pour réduire ces bruits, il est nécessaire d'insérer un étalon pour rendre ces lasers monomodes et un élément biréfringent pour les rendre bi-fréquences.

Un laser mono-fréquence comprend un milieu actif MA et un élément sélectif en fréquence, typiquement une lame à face parallèle dit étalon Fabry Perot FP, pour le rendre monomode longitudinal. Si le laser oscille suivant un seul état de polarisation, il est monofréquence. L'étalon sélectionne un mode parmi les p modes longitudinaux de fréquence fp telle que :

$$fp = p.C/2.L \quad \text{Lopt longueur optique de la cavité}$$

Lopt longueur optique de la cavité

Dans le cas des lasers état solide, le spectre d'intensité de ce laser présente un excès de bruit résonant à la fréquence des oscillations de relaxation (bruit de relaxation). Ce phénomène résulte de l'interaction résonante entre l'inversion de population et les photons. L'exaltation du bruit qui découle de ce phénomène est typique des lasers de classe B, dans lesquels la durée de vie de l'inversion de population $T_{pop}$ est grande devant la durée de vie des photons $T_{phot}$ dans la cavité.

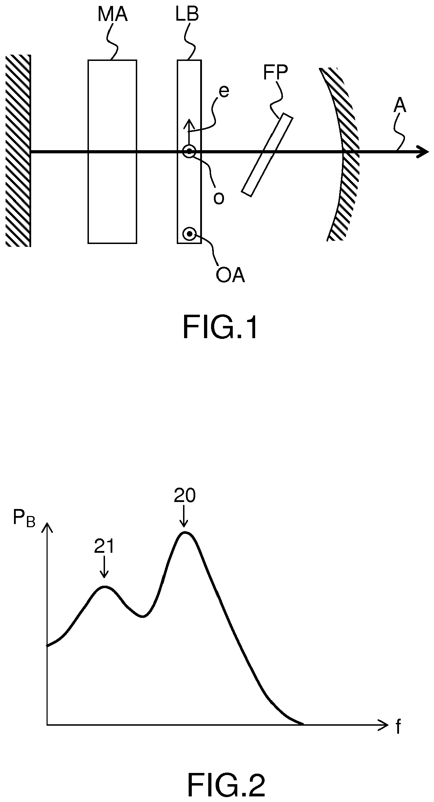

Un laser état solide bi-fréquence est illustré figure 1. Ce laser est rendu bi-fréquence (ou bi-mode ou bipolarisation) par l'ajout dans la cavité laser d'une lame biréfringente LB, d'axe optique OA perpendiculaire à la direction d'oscillation laser A. La cavité devient alors anisotrope, ce qui induit une levée de dégénérescence de polarisation, et l'existence de deux modes de polarisation linéaires et orthogonaux. La longueur optique de la cavité est différente pour les deux polarisations, ce qui conduit à l'existence de deux modes présentant deux fréquences fo et fe très proches l'une de l'autre (typiquement quelques GHZ de différence) oscillant dans la cavité laser. Ainsi un mode de polarisation est associé à une fréquence d'oscillation.

Ces lasers génèrent naturellement un signal hyperfréquence (à la fréquence différence abs(f0-fe)) sur une porteuse optique : il suffit de projeter les deux états de polarisation à l'aide d'un polariseur à 45° en sortie de laser pour générer sur un photodétecteur ce signal à abs(fe-fo). Dans ces lasers, il faut noter que l'écart de fréquence est usuellement limité à l'intervalle spectral libre de la cavité, donc quelques GHz à quelques dizaines de GHz pour une cavité de longueur centimétrique à millimétrique.

En sus du bruit de relaxation décrit plus haut, le laser bi-fréquence présente une résonance supplémentaire correspondant au bruit de partition. Ce dernier provient du couplage via le milieu actif des deux modes qui oscillent simultanément dans la cavité laser. Ce bruit est également dénommé bruit anti-phase car la variation d'intensité pour un mode de polarisation est en opposition de phase par rapport à la variation d'intensité pour l'autre mode.

Ainsi un laser bi-fréquence présente un bruit d'intensité en excès à deux fréquences caractéristiques, illustré sur la figure 2 qui représente la densité spectrale de puissance du bruit $P_B$ d'un laser bi-fréquence en fonction de la fréquence f :

    (i) une première fréquence 20 correspond aux oscillations de relaxations qu'on retrouve communément dans les lasers solides monomodes, typiquement comprise entre 10 kHz et 10 MHz,
    (ii) une deuxième fréquence 21 correspond à la fréquence propre d'échange d'énergie entre les deux polarisations du laser bi-fréquence. Cette fréquence est comprise entre 0Hz et la fréquence des oscillations de relaxation, selon l'importance du couplage entre les deux modes.

Ces différents bruits sont néfastes pour de nombreuses applications et constituent incontestablement le point faible des lasers à état solide. Le développement de sources lasers à état solide mono-fréquence et bi-fréquences dépourvues d'excès de bruit constitue actuellement un réel défi technique dans la perspective de répondre aux besoins des différents domaines d'applications notamment lorsque de fortes puissances de sortie sont requises.

Il existe plusieurs solutions pour réduire le bruit dû aux oscillations de relaxation.

Dans un laser état solide, une première méthode est d'implémenter une contre-réaction électronique sur le laser de pompe. Cependant, une telle technique ne permet pas de réduire le bruit sur tout le spectre compte tenu des limitations pratiques liées à la bande passante de modulation de la pompe, et/ou à la bande passante de modulation de l'inversion de population dans le milieu actif. Un compromis est donc à faire entre bande passante et efficacité de réduction du bruit. De plus, lorsque le laser est bi-fréquence, cette technique ne permet pas de réduire le bruit de partition.

Une deuxième méthode est d'utiliser en sortie du laser un "noise eater", c'est-à-dire un asservissement externe de l'intensité basé sur un modulateur et un photodétecteur. Ce type d'asservissement est complexe, en particulier dans le cas bi-fréquence où deux asservissements séparés sont nécessaires, et induit par principe des pertes en sortie de laser.

Les méthodes décrites ci-dessus permettent de réduire le bruit de relaxation typiquement d'un facteur mille mais pas de le faire disparaitre.

Une alternative décrite par exemple dans le document US 2009/0225800 consiste à utiliser un laser à semi-conducteur dans un régime de fonctionnement de classe A. Ce régime est obtenu en allongeant significativement la durée de vie des photons dans la cavité laser de telle sorte qu'elle soit supérieure à la durée de vie d'inversion de population. Dans un tel régime de fonctionnement les oscillations de relaxation disparaissent naturellement. Cependant, le passage d'une dynamique de classe B à une dynamique de classe-A tout en assurant un fonctionnement monomode n'est techniquement possible que pour des lasers à semi-conducteurs dans lesquels la durée de vie d'inversion de population est naturellement très courte (ns). Avec un laser à état solide, la durée de vie d'inversion de population (ms-$\mu$s) impliquerait un laser de longueur kilométrique qu'il serait impossible de rendre monomode. Or, les lasers à état-solide qu'ils soient "bulk" ou fibrés sont aujourd'hui les seuls à pouvoir produire des puissances optiques importantes (dans la gamme du W-kW) avec une bonne pureté spectrale.

Une troisième méthode illustrée figure 3 et décrite dans le document US 6788715 consiste à insérer un mécanisme de pertes non linéaires d'absorption dans la cavité laser. Ce composant A2P non linéaire modifie la dynamique du laser, de telle façon qu'il oppose à une augmentation de l'intensité du laser par une augmentation de son absorption, et inversement il s'oppose à une diminution de l'intensité par une diminution de son absorption, créant de ce fait une contre-réaction directe aux variations d'intensité dues au bruit. Cette méthode s'applique à un laser mono-fréquence.

Ces techniques fonctionnent bien quand le laser est mono-fréquence. Lorsque le laser est bi-fréquence, l'excès de bruit à la fréquence propre d'échange entre les deux modes (bruit de partition) résiste à l'ensemble de ces techniques car cet échange d'énergie résonnant se fait à puissance totale constante, et que les moyens de mesure et de contre-réaction sont basé sur une modulation de cette puissance totale (première et deuxième méthode). Pour la troisième méthode, le composant A2P :

- peut-être uniquement sensible à la puissance totale, et donc incapable d'éliminer le bruit d'antiphase,
- peut induire lui-même un autre couplage entre les deux états de polarisation, et induire un nouvel excès de bruit

Une méthode pour réduire le bruit de partition spécifique des lasers bi-fréquence est de découpler les deux modes. Il s'agit de réaliser un milieu actif particulier de manière à rendre le gain laser indépendant pour chaque mode, c'est-à-dire que le gain laser d'un mode de polarisation est rendu indépendant du gain laser de l'autre mode de polarisation. Cette architecture n'est cependant compatible que de certains milieux actif spécifiques, par exemple une matrice de Yag comprenant des ions Néodymes dans des sites particuliers et orientés de manière particulière dans la cavité laser.

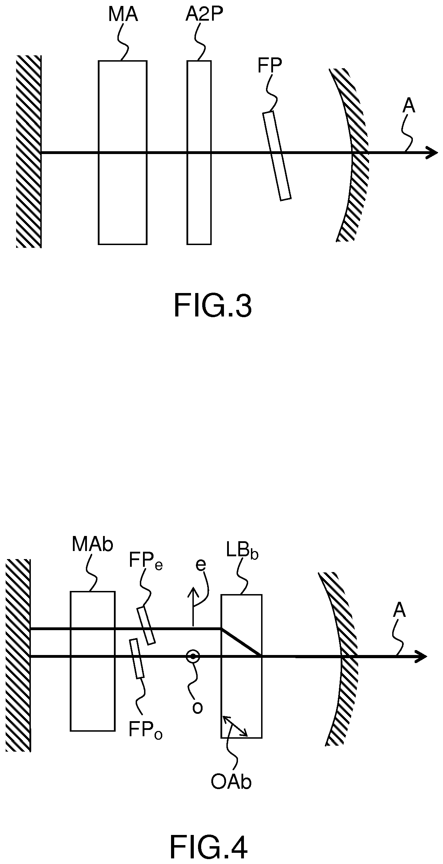

Une autre méthode est de réaliser un laser tel qu'illustré figure 4 et décrit dans le document « Dual tunable wavelength Er,Yb :glass laser for terahertz beat frequency génération » M. Alouini et al, Photon. Techn. Lett. 10, 1554-1556 (1998). Une lame biréfringente LBb est introduite dans la cavité de manière à séparer spatialement les deux états de polarisation dans le milieu actif. Pour ce faire, l'axe optique de la lame n'est plus orienté parallèlement aux faces de la lame, mais forme avec elle un angle typique de 45°, ce qui induit une double réfraction et donc une séparation.

Un inconvénient est qu'il faut adapter le pompage du milieu actif à ces deux nouveaux modes séparés spatialement : le pompage doit recouvrir ces deux nouveaux faisceaux.

On contrôle l'oscillation monomode de chacune des polarisations séparément avec un étalon différent Flo, Fle et ainsi on augmente l'écart de fréquence entre eux, jusqu'à plusieurs THz (GHz dans les lasers sans séparation).

Un but de la présente invention est de palier aux inconvénients précités et plus particulièrement de réaliser un laser état solide présentant un faible bruit, tant de relaxation que de partition lorsqu'il est bi-fréquence ou rendu mono fréquence.

## DESCRIPTION DE L'INVENTION

La présente invention a pour objet un laser à état solide tel que défini par la revendication 1.

Avantageusement, les états propres de polarisation orthogonaux sont linéaires.

Selon une variante préférée, la cavité C comprend en outre une deuxième lame biréfringente à faces parallèle présentant un deuxième axe optique formant un deuxième angle avec la direction d'oscillation, le deuxième angle n'étant ni parallèle ni perpendiculaire à la direction d'oscillation à 10° près, la deuxième lame biréfringente étant configurée pour générer un deuxième décalage spatial entre lesdits premier et deuxième faisceaux différent du premier décalage spatial, et définissant une troisième zone de la cavité laser comprenant les premier et deuxième faisceaux laser présentant ledit deuxième décalage spatial.

Selon un mode de réalisation l'absorbant est disposé entre la première et la deuxième lame biréfringente.

Avantageusement, le milieu actif est disposé dans la troisième zone.

Selon un mode de réalisation, les premières et deuxième lames sont identiques et disposées de sorte que les premier et deuxième angles sont symétriques par rapport à la direction d'oscillation, le deuxième décalage étant alors égal à zéro et les premier et deuxième faisceaux étant confondus dans la troisième zone.

Selon un mode de réalisation, la cavité est une cavité en anneau.

Selon un autre mode de réalisation, la ou les lames biréfringentes et l'absorbant sont aptes à réaliser une rotation identique autour d'un axe perpendiculaire à la direction d'oscillation.

Selon une variante, les premières et deuxième lames sont identiques et disposées de sorte que les premier et deuxième axes optiques sont parallèles entre eux, la cavité comprenant en outre une lame demi-onde disposée entre les première et deuxième lames biréfringentes . Avantageusement, la ou les lames biréfringentes et l'absorbant sont accolés de manière à former un composant unique.

Avantageusement, la cavité comprend au moins un miroir concave. Avantageusement, les premier et deuxième faisceaux laser présentent un diamètre moyen sensiblement identique et le premier et/ou deuxième décalage sont compris entre 1% et 5 fois la valeur du diamètre moyen.

D'autres caractéristiques, buts et avantages de la présente invention apparaîtront à la lecture de la description détaillée qui va suivre et en regard des dessins annexés donnés à titre d'exemples non limitatifs et sur lesquels :

- La figure 1 déjà citée illustre un laser solide bi-fréquence selon l'état de la technique.
- La figure 2 déjà citée illustre la densité spectrale de puissance du bruit d'intensité en fonction de la fréquence d'un laser bi-fréquence selon l'état de la technique.
- La figure 3 déjà citée illustre une méthode de l'état de la technique pour réduire le bruit d'intensité d'un laser bi-fréquence selon l'état de la technique.
- La figure 4 déjà citée illustre une méthode de l'état de la technique pour réduire le bruit de partition d'un laser bi-fréquence selon l'état de la technique.
- La figure 5 schématise un laser état solide selon l'invention.
- La figure 6 illustre un exemple d'un laser état solide.
- La figure 7 illustre un autre exemple d'un laser état solide.
- La figure 8 décrit un mode de réalisation d'un laser état solide selon l'invention.
- La figure 9 décrit un autre de réalisation d'un laser état solide selon l'invention.
- La figure 10 décrit un mode de réalisation particulier d'un laser état solide selon l'invention.
- La figure 11 décrit un laser selon l'invention présentant une cavité miroir concave/miroir concave
- La figure 12 décrit un laser selon l'invention présentant une cavité en anneau.
- La figure 13 décrit une varainte d'un laser selon l'invention présentant une cavité en anneau.
- La figure 14 décrit un autre exemple dans lequel la ou les lames biréfringentes sont aptes à réaliser une rotation identique autour d'un axe.
- La figure 15 décrit une variante d'un laser selon l'invention.

## DESCRIPTION DETAILLEE DE L'INVENTION

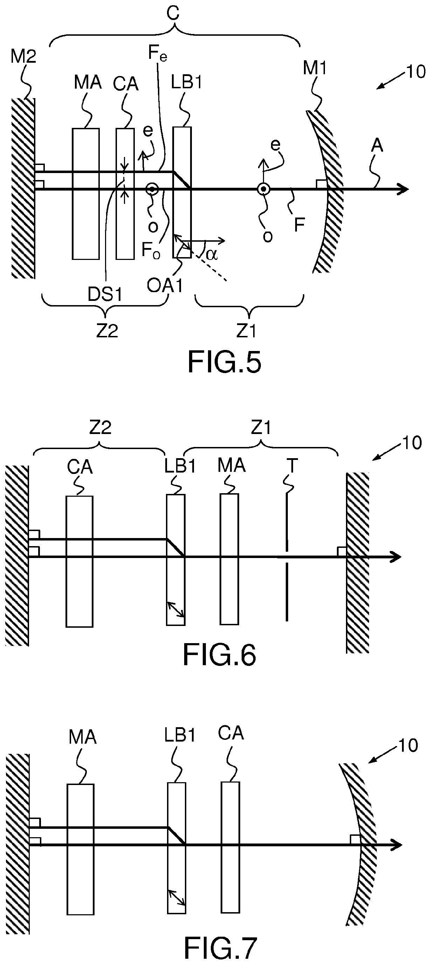

La figure 5 schématise un laser état solide 10 selon l'invention.

Il comprend une cavité laser C qui comprend un milieu amplificateur MA, et présente une direction d'oscillation A du faisceau laser F. L'oscillation laser amplifiée par le milieu actif MA génère un faisceau laser cohérent F qui sort de la cavité au travers d'un miroir M1, selon un fonctionnement classique.

La cavité laser C du laser 10 selon l'invention comprend également une première lame biréfringente LB1 à faces parallèle présentant un premier axe optique OA1 formant un premier angle $\alpha$ avec la direction d'oscillation A, le

premier angle $\alpha$ n'étant ni parallèle ni perpendiculaire à la direction d'oscillation A à 10° près, c'est à dire que $\alpha$ est compris dans les intervalles [10, 80°] ou [100°, 170°] mesurés en prenant la direction d'oscillation A comme référence.

La lame biréfringente LB1 dans la cavité C génère ainsi à partir du faisceau laser F unique incident sur la lame, un premier faisceau laser Fo et un deuxième faisceau laser Fe parallèles entre eux et présentant un premier décalage spatial DS1. Ces faisceaux correspondent respectivement à un premier état propre de polarisation o et un deuxième état propre de polarisation e, ces états étant orthogonaux entre eux et à la direction d'oscillation. Ces états sont présents dans la cavité du fait que le laser est apte à osciller dessus, et correspondent donc à deux modes laser, oscillant chacun à une fréquence donnée, fo pour Fo et fe pour Fe, comme décrit plus haut. Préférentiellement les états propres de polarisation o et e sont linéaires dans toute la cavité.

Selon une variante on positionne deux lames d'onde de part et d'autre du milieu amplificateur MA, pour que les états propres soient de polarisation hélicoïdales dans le milieu amplificateur, afin de diminuer l'effet de « spatial hole burning » dans le milieu amplificateur et de faciliter l'oscillation mono-fréquence sur chaque état de polarisation.

La première lame biréfringente LB1 et la cavité C sont configurées pour que la première lame biréfringente sépare une première zone Z1 de la cavité C dans laquelle le faisceau laser F est unique, d'une deuxième zone Z2 comprenant les faisceaux laser Fo et Fe.

Ainsi la lame biréfringente génère deux faisceaux Fo et Fe spatialement séparés d'un premier décalage spatial DS1. La séparation souhaitée DS1 est ajustée en fonction de la biréfringence de la lame $\Delta$n, de son épaisseur e et de l'angle $\alpha$ de l'axe optique OA1.

Selon une variante préférée, l'angle de l'axe optique est choisi de manière à maximiser le décalage spatial pour une longueur d'onde donnée.

Par exemple pour une lame biréfringente de $YVO_4$ d'épaisseur e = 200$\mu$m et d'axe optique OA1 d'angle $\alpha$= 45°, un décalage spatial DS1 de 20 $\mu$m est obtenu pour une longueur d'onde de 1.5 $\mu$m.

La cavité C du laser 10 selon l'invention comprend en outre un absorbant CA, typiquement une lame, dont l'absorption augmente lorsque la puissance optique du faisceau le traversant augmente.

Pour obtenir l'effet escompté, l'absorbant CA est disposé dans la deuxième zone Z2 de la cavité, de sorte qu'il soit traversé par les premier Fo et deuxième Fe faisceaux spatialement décalés. C'est en effet l'existence de deux faisceaux spatialement décalés Fo et Fe de polarisation différente o et e, qui permet l'absorption séparée, et/ou l'amplification séparée de ces deux modes de polarisation, oscillant à des fréquences différentes fo et fe. C'est ce traitement séparé qui permet la réduction simultanée du bruit de relaxation et du bruit anti-phase du laser.

La séparation spatiale des deux états de polarisation dans l'absorbant permet alors au mécanisme d'absorption nonlinéaire d'agir indépendamment sur chaque état de polarisation et ainsi d'inhiber l'échange de fluctuations entre les deux modes du laser, i.e., le bruit d'antiphase. Le bruit en phase (oscillations de relaxations) est quant à lui systématiquement réduit par l'absorption non-linéaire que l'on sépare ou pas les deux états de polarisation dans le cristal semiconducteur.

En effet l'insertion de la lame biréfringente LB1 dans la cavité C du laser à état solide va naturellement fixer les deux états propres du laser suivant deux polarisations o et e linéaires et orthogonales. La présence de l'absorbant non linéaire CA produit une réduction du bruit d'intensité du laser et ce en particulier à la fréquence des oscillations de relaxation (bruits en phase). La lame LB1 assurant, par construction, un découplage spatial des deux polarisations au niveau du CA, le mécanisme d'absorption non-linéaire agit sur les deux modes, quelque soit leur degré de corrélation, et même si leurs fluctuations sont en opposition de phase. Par conséquent, le bruit dit d'antiphase disparaît aussi. De manière générale, quelle que soit l'amplitude de corrélation des fluctuations d'intensité entre les deux modes et quelles que soient les phases relatives de ces fluctuations, une réduction du bruit d'intensité est obtenue dans la cavité C du laser selon l'invention. Par ailleurs, la réduction de bruit étant aussi efficace à basse fréquence, l'insertion du composant dans la cavité laser favorise la robustesse de l'oscillation simultanée des deux modes laser.

Selon une variante préférée illustrée figure 5, le milieu amplificateur est également disposé dans la deuxième zone. Le milieu actif MA et l'absorbant CA sont ainsi disposés dans la deuxième zone Z2, de sorte qu'ils soient tous deux traversés par le premier faisceau Fo et deuxième faisceau Fe spatialement décalés. Cette architecture est avantageuse lorsque le couplage dans le milieu actif est trop fort pour assurer une oscillation bi fréquence sur un faisceau unique. La séparation spatiale, même partielle, des deux polarisations dans le milieu actif MA permet d'obtenir l'oscillation bi-fréquence.

Selon cette variante :

- Lorsque le décalage spatial est tel que les deux faisceaux Fo et Fe ne se recouvrent pas, les faisceaux sont disjoints, le bruit anti-phase n'existe plus, mais le bruit de relaxation est toujours présent et réduit par l'absorbant. Il convient alors d'adapter le faisceau de pompe à cette géométrie pour pouvoir pomper les deux faisceaux.
- Lorsque le décalage est très faible, aucune modification du faisceau pompe n'est nécessaire, ce qui simplifie la structure du laser selon l'invention.

La valeur du décalage est ainsi choisie en fonction du but recherché.

Selon un exemple illustré figure 6 le milieu amplificateur MA est disposé dans la première zone Z1. Dans cette configuration aucune modification de la géométrie du pompage n'est nécessaire, car il n'y a qu'un seul faisceau F qui doit être pompé pour être amplifié. Cet avantage simplifie très nettement la structure du laser et en diminue le coût.

Selon un autre exemple illustré figure 7 c'est le milieu amplificateur qui est dans la deuxième zone Z2 et l'absorbant CA dans la première zone Z1. Cette variante est intéressante dans le cas d'un laser état solide bi-fréquence ne présentant pas de bruit d'antiphase (cf plus haut Etat de la technique), mais dont on souhaite supprimer le bruit des oscillations de relaxation. Si la lame CA présente un couplage entre les deux états de polarisation, elle est susceptible d'introduire un bruit d'antiphase. Séparer les deux modes dans celle-ci permet de ne pas générer à nouveau du bruit d'antiphase.

Selon un mode de réalisation, l'absorbant nonlinéaire CA est réalisé par absorption à deux photons (ou plus) dans un semi-conducteur de type « bulk », puits quantiques, bâtonnets quantiques, ilots quantiques... Le semi-conducteur est choisi de sorte que son énergie de « gap » soit supérieure à l'énergie des photons du laser. Le semi-conducteur est donc transparent à des puissances optiques modérées. Cependant, grâce au mécanisme d'absorption à deux photons, il devient d'autant plus absorbant que la puissance optique augmente. Cela permet de gommer les fluctuations d'intensité intra-cavité. De plus, l'indice du semi-conducteur étant de l'ordre de 3, ses deux faces sont partiellement réfléchissantes (réflexions de Fresnel). La lame de semi-conducteur agit donc comme un filtre spectral (effet Fabry-Perot) qui rend le laser monomode longitudinalement. Typiquement, une lame de Si ou de GaAs dont l'épaisseur est de l'ordre de 40 $\mu$m à 100 $\mu$m suffit à produire suffisamment de pertes nonlinéaires pour réduire efficacement le bruit d'intensité aux oscillations de relaxation du laser tout en le rendant monomode longitudinalement.

Selon une autre mode de réalisation l'absorbant non-linéaire CA est un cristal nonlinéaire, tel une céramique ou un verre. L'ordre de la non-linéarité n'ayant pas d'importance à condition de disposer de suffisamment de puissance. Pour le cas de la génération de seconde harmonique (nonlinéarités d'ordre 2) le signal fondamental qui subit le doublage de fréquence est d'autant plus absorbé que sa puissance est grande.

Pour stabiliser la cavité laser, il est nécessaire d'introduire une focalisation sur le faisceau laser. Cette stabilisation est obtenue classiquement à l'aide d'un miroir concave M1.

La cavité C est alors typiquement composée d'un miroir plan M2 et d'un miroir concave M1 (cavité plan/concave). Dans ce cas, pour des raisons de symétrie, la zone Z1 de la cavité C est située du côté du miroir concave, et donc la zone Z2 du côté du miroir plan.

Mais d'autres méthodes de stabilisation sont possibles, comme d'utiliser une lentille dans une cavité plan/plan, cette lentille pouvant être constituée par la focale thermique due au pompage dans le milieu actif ou par une lentille physique. Préférentiellement, un trou de filtrage est inséré dans la cavité plan/plan, comme illustré figure 6.

Le faisceau laser est typiquement un faisceau gaussien, dont le diamètre moyen Dm est dénommé « waist » (largeur totale à $1/e^2$ en intensité). Typiquement, Dm varie de 10 $\mu$m à 1mm dans les lasers état solide bi-fréquence. Dans la cavité laser, les faisceaux F, Fo et Fe présentent sensiblement le même diamètre Dm pour une même position sur l'axe A. Selon une variante le décalage spatial DS1 correspond à une fraction du diamètre du faisceau, typiquement entre 10$\mu$m et 100 $\mu$m, a minima 1% du diamètre Dm. Un faible décalage est suffisant pour réduire le couplage, et donc diminuer sensiblement le bruit, et ne nécessite qu'une lame biréfringente de faible épaisseur, ce qui simplifie les réglages et diminue les coûts. De plus, le laser selon cette variante présente des écarts de fréquence plus grands puisque la longueur de la cavité est réduite. En effet, une lame d'épaisseur plus élevée signifie que l'on ne peut pas réduire la longueur de cavité autant qu'on le ferait avec une lame plus mince. Et une cavité plus grande signifie un intervalle spectral libre plus petit, et donc un écart de fréquence atteignable plus petit.

Selon une autre variante, le décalage spatial DS1 constitue une séparation totale des deux faisceaux Fo et Fe, soit correspond à moins 1.5 fois Dm. Le couplage est alors quasi nul. Il n'est pas nécessairement intéressant de trop séparer les faisceaux, ainsi DS1 est préférentiellement inférieur à 5.Dm, et un écart de typique de 100$\mu$m à 1 mm assure cette séparation complète.

Ainsi la combinaison de la lame biréfringente et de l'absorbant insérés dans la cavité C du laser 10 selon l'invention a les effets suivants :

- le laser est rendu bi-fréquence, avec des états de polarisation bien fixés,
- chaque état de polarisation est filtré spectralement et rendu ainsi monofréquence longitudinal,
- les bruits sont absorbés quelles que soient leurs corrélations,
- la robustesse de l'oscillation bifréquence est améliorée.

Le laser peut également être rendu monofréquence et monopolarisation, tout en gardant un faible bruit et une bonne stabilité, en introduisant un obturateur dans la cavité qui coupe un des deux faisceaux Fo et Fe.

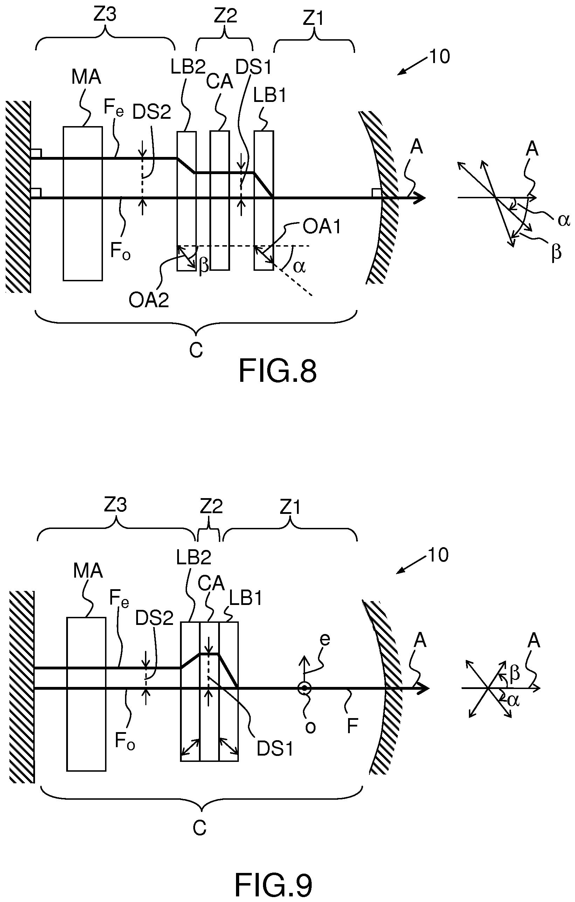

Un mode de réalisation du laser 10 selon l'invention est décrit figure 8. La cavité laser C comprend en outre une deuxième lame biréfringente LB2 à faces parallèle présentant un deuxième axe optique OA2 formant un deuxième

angle $\beta$ avec la direction d'oscillation A, qui n'est ni parallèle ni perpendiculaire à la direction d'oscillation A à 10° près, c'est-à-dire que $\beta$ est compris dans les intervalles [10, 80°] ou [100°, 170°] mesurés en prenant la direction d'oscillation A comme référence.

La deuxième lame biréfringente est configurée pour générer un deuxième décalage spatial DS2 entre les faisceaux Fo et Fe, différent du premier décalage spatial DS1. Elle définit une troisième zone Z3 de la cavité laser C comprenant les faisceaux Fo et Fe présentant le deuxième décalage spatial DS2.

Pour générer un décalage spatial DS2 différent de DS1, on peut soit changer l'angle de l'axe optique ($\beta \neq \alpha$), soit, pour un même angle en valeur absolue ($\beta = \alpha$ ou $\beta = -\alpha$), choisir une épaisseur de la deuxième lame biréfringente LB2 différente de celle de la première lame biréfringente LB1. Cette dernière option est préférée, car il existe un angle d'axe optique qui maximise le décalage pour une épaisseur de lame donnée. C'est cet angle qui permet de réaliser la lame biréfringente la plus mince donc la cavité la plus petite.

Par exemple on utilise deux lames biréfringentes d'YVO4 taillées à $\alpha=\beta=45°$ (optimum) mais d'épaisseurs différentes.

Lorsque les angles $\alpha$ et $\beta$ sont de même signe, le décalage DS2 est supérieur à DS1, comme illustré figure 8. Lorsque les angles $\alpha$ et $\beta$ sont de signe différents, le décalage DS2 est inférieur à DS1, comme illustré figure 9.

Préférentiellement l'absorbant Ca est disposé entre LB1 et LB2 et le milieu actif MA dans la zone 3.

Selon une autre variante, le milieu actif MA est disposé entre LB1 et LB2 et l'absorbant CA dans la zone 3.

Cette géométrie est obtenue avec deux lames biréfringentes d'épaisseur e ou d'axe optique différents, et/ou de matériau différents. Elle permet de découpler différemment les deux faisceaux dans le milieu absorbant CA et le milieu actif MA, afin de tenir compte d'un couplage différent entre les modes dans ces milieux (amplificateur et absorbant) et donc d'optimiser le fonctionnement du laser en terme de bruit et d'oscillation bifréquence.

Selon un mode de réalisation particulier, la première lame LB1 et la deuxième lame LB2 sont identiques et disposées de sorte que le premier angle $\alpha$ et le deuxième angle $\beta$ sont symétriques par rapport à la direction d'oscillation A, c'est-à-dire $\beta = -\alpha$. Dans cette configuration, le deuxième décalage DS2 est alors égal à zéro et Fo et Fe sont confondus dans la troisième zone Z3.

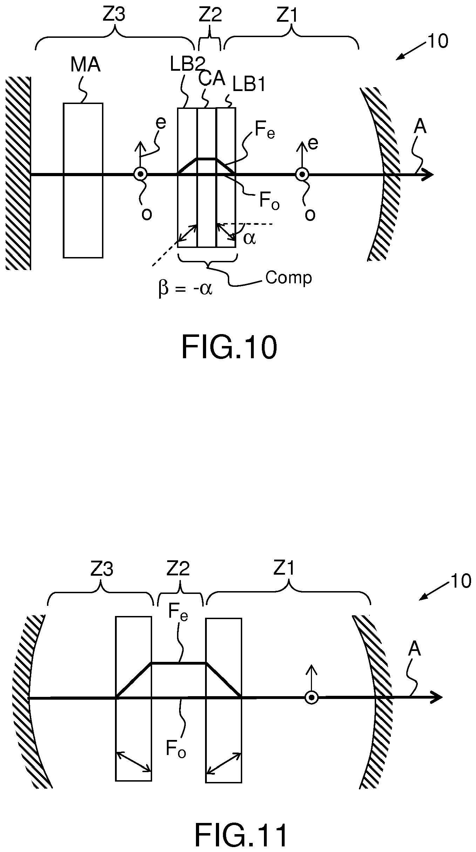

Une telle configuration présente l'avantage de pouvoir être implémentée sans aucune modification du système de pompage, car il n'y a qu'un seul faisceau à amplifier dans le milieu actif, suivant le même parcours que s'il n'y avait pas de lame et d'absorbant. De plus l'écart dans l'absorbant peut être ajusté à volonté sans aucune modification de la cavité laser ni de l'architecture de pompage et cela quelle que soit la nature de la cavité. Selon une variante préférée, la ou les lames biréfringentes et le l'absorbant sont accolés, comme illustré figure 10, et forment un composant unique Comp, ce qui simplifie la fabrication et les réglages du composant dans la cavité laser C.

Le mode de réalisation de la figure 10 permet également de réaliser une cavité laser miroir concave/miroir concave comme illustré figure 11. En effet dans une cavité laser, les faisceaux sont obligatoirement confondus au niveau des miroirs concaves.

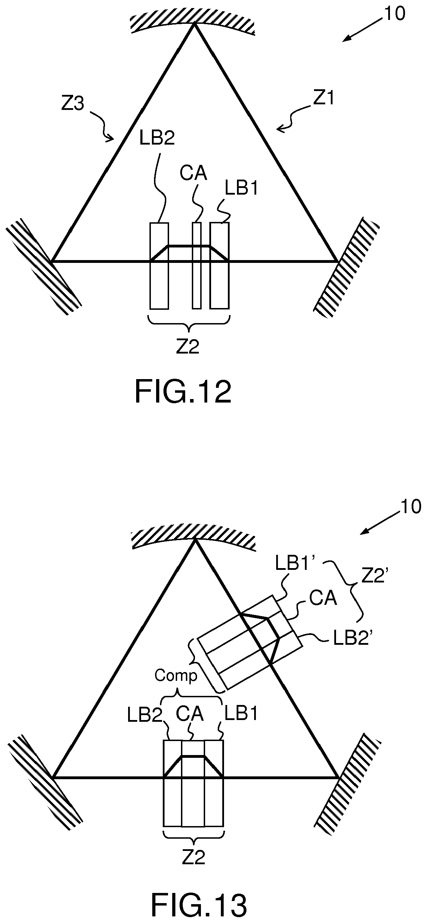

Selon une autre variante du mode de réalisation particulier, illustrée figure 12, la cavité C est une cavité en anneau. Les lames et l'absorbant peuvent être positionnés à n'importe quel endroit dans cavité.

En variante illustrée figure 13 la cavité comprend une pluralité d'ensemble Comp constitués des deux lames biréfringentes et de l'absorbant.

Ce type de cavité est particulièrement intéressant car c'est la configuration de gyrolasers pour lesquels le contrôle du couplage entre modes est crucial.

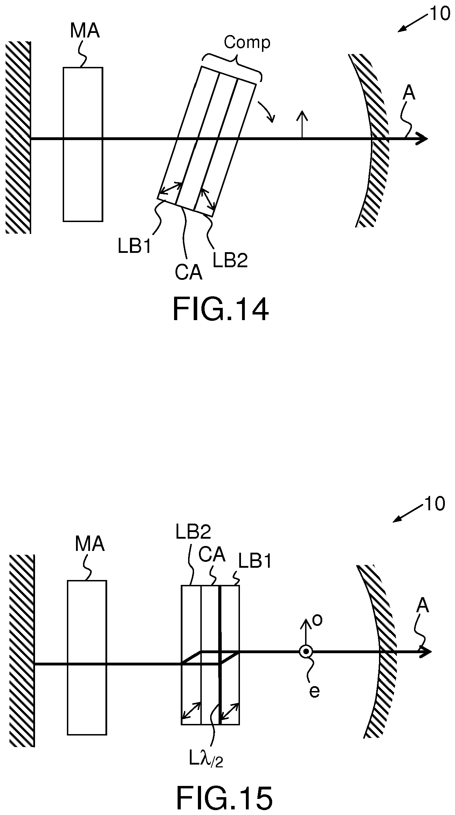

Selon une autre un autre exemple illustré figure 14, la ou les lames biréfringentes LB1/LB2 et l'absorbant CA sont aptes à réaliser une rotation identique autour d'un axe perpendiculaire à la direction d'oscillation A.

Préférentiellement les lames et l'absorbant sont accolés en un composant unique Comp, pour faciliter la rotation identique et les réglages.

L'inclinaison permet de passer d'un fonctionnement bi-fréquence faible bruit à un fonctionnement mono-fréquence faible bruit favorisant l'oscillation robuste d'une seule polarisation. Il s'ensuit une stabilité renforcée du laser mono-fréquence.

En effet, en inclinant suffisamment l'axe optique du composant Comp par rapport à la direction d'oscillation du laser A, on produit une anisotropie de pertes qui est suffisante pour favoriser l'oscillation d'une seule polarisation (celle qui voit le moins de pertes). Ainsi, sans aucune modification, ce composant optique peut prévenir le basculement intempestif de la polarisation du laser tout en le rendant monofréquence et faible bruit.

Selon un mode de réalisation illustré figure 15, les lames biréfringentes LB1 et LB2 sont identiques et disposées de sorte que les angles $\alpha$ et $\beta$ des axes optiques OA1 et OA2 sont identiques par rapport à la direction d'oscillation A. En d'autre termes les deux axes optiques sont parallèles entre eux. La cavité comprend en outre une lame demi-onde $L_{\lambda/2}$ disposée entre les lames biréfringentes LB1 et LB2. Préférentiellement les lames, l'absorbant et la lame demi-onde sont accolés pour former un composant unique, et la lame demi-onde, orientée à 45°, est insérée entre l'absorbant CA et une des deux lames biréfringentes. Dans cette configuration, l'ensemble du composant ne produit pas de déphasage entre les deux états de polarisation : les deux chemins optiques sont quasiment égaux, ce qui confère au composant un caractère quasiment isotrope. Une autre possibilité est d'ajuster les épaisseurs des deux lames, avec des axes optiques non parallèles entre eux.

Il est alors possible d'introduire un autre élément biréfringent, par exemple électro-optique, qui génère l'écart de fréquence souhaité entre les polarisations. On dissocie ainsi la fonction de contrôle du bruit de celle de contrôle de l'écart de fréquence.

## Revendications

1. Laser à état solide (10) comprenant une cavité (C) comprenant un milieu amplificateur (MA), et présentant une direction d'oscillation (A) d'un faisceau laser (F), la cavité comprenant en outre:

   - une première lame biréfringente (LB1) à faces parallèle présentant un premier axe optique (OA1) formant un premier angle ($\alpha$) avec la direction d'oscillation (A), ledit premier angle n'étant ni parallèle ni perpendiculaire à la direction d'oscillation (A) à 10° près,
   de manière à générer, à partir d'un faisceau laser (F) unique, un premier (Fo) et un deuxième (Fe) faisceaux laser parallèles entre eux et présentant un premier décalage spatial (DS1), correspondant respectivement à un premier (o) et un deuxième (e) état propre de polarisation orthogonaux entre eux, et sur lesquels le laser est apte à osciller,
   la première lame biréfringente (LB1) et la cavité étant configurées pour que la première lame biréfringente sépare une première zone (Z1) de la cavité (C) dans laquelle le faisceau laser (F) est unique, d'une deuxième zone (Z2) comprenant lesdits premier (Fo) et deuxième (Fe) faisceaux laser
   **caractérisé en ce que** la cavité comprend en outre
   - un absorbant (CA) dont l'absorption augmente avec la puissance optique du faisceau le traversant,
   - le milieu actif (MA) et l'absorbant (CA) étant disposés dans la deuxième zone (Z2), de sorte qu'ils soient tous deux traversés par les premier (Fo) et deuxième (Fe) faisceaux spatialement décalés.

2. Laser selon la revendication 1 dans lequel les états propres de polarisation orthogonaux sont linéaires.

3. Laser selon l'une des revendications précédentes dont la cavité (C) comprend en outre une deuxième lame biréfringente (LB2) à faces parallèles présentant un deuxième axe optique (OA2) formant un deuxième angle ($\beta$) avec la direction d'oscillation (A), ledit deuxième angle n'étant ni parallèle ni perpendiculaire à la direction d'oscillation (A) à 10° près,
   la deuxième lame biréfringente étant configurée pour générer un deuxième décalage spatial (DS2) entre lesdits premier (Fo) et deuxième (Fe) faisceaux différent du premier décalage spatial (DS1) et définissant une troisième zone (Z3) de la cavité laser (C) comprenant lesdits premier (Fo) et deuxième (Fe) faisceaux laser présentant ledit deuxième décalage spatial.

4. Laser selon la revendication 3 dans lequel l'absorbant est disposé entre la première (LB1) et la deuxième (LB2) lame biréfringente.

5. Laser selon l'une des revendications 3 ou 4 dans lequel le milieu actif est disposé dans la troisième zone (Z3).

6. Laser selon l'une des revendications 3 à 5 dans lequel les premières (LB1) et deuxième (LB2) lames sont identiques et disposées de sorte que lesdits premier ($\alpha$) et deuxième ($\beta$) angles sont symétriques par rapport à la direction d'oscillation (A), le deuxième décalage (DS2) étant alors égal à zéro et les premier (Fo) et deuxième (Fe) faisceaux étant confondus dans la troisième zone (Z3).

7. Laser selon l'une des revendications précédentes dans lequel la cavité est une cavité en anneau.

8. Laser selon l'une des revendications précédentes dans lequel la ou les lames biréfringentes et l'absorbant sont aptes à réaliser une rotation identique autour d'un axe perpendiculaire à la direction d'oscillation (A).

9. Laser selon l'une des revendications 3 à 8 dans lequel les premières et deuxième lames sont identiques et disposées de sorte que lesdits premier (OA1) et deuxième (OA2) axes optiques sont parallèles entre eux et comprenant en outre une lame demi-onde ($L_{\lambda/2}$) disposée entre les première (LB1) et deuxième (LB2) lames biréfringentes .

10. Laser selon l'une des revendications précédentes dans lequel la ou les lames biréfringentes et l'absorbant sont accolés de manière à former un composant unique (Comp).

11. Laser selon l'une des revendications précédentes dans lequel la cavité comprend au moins un miroir concave.

12. Laser selon l'une des revendications précédentes dans lequel les premier et deuxième faisceaux laser présentent un diamètre moyen (Dm) sensiblement identique et le premier et/ou deuxième décalage sont compris entre 1% et 5 fois la valeur du diamètre moyen.

**Patentansprüche**

1. Festkörperlaser (10), welcher einen Hohlraum (C) beinhaltet, welcher ein Verstärkungsmedium (MA) beinhaltet, und welcher eine Oszillationen Richtung (A) eines Laserstrahls (F) aufweist, wobei der Hohlraum zudem Folgendes beinhaltet:

- eine erste doppelbrechende Platte (LB1) mit parallelen Seiten, welche eine erste optische Achse (OA1) aufweist, welche einen ersten Winkel ($\alpha$) zu der Oszillationsrichtung (A) bildet, wobei der erste Winkel innerhalb von 10° weder parallel noch rechtwinklig zur Oszillationsrichtung (A) ist,

um so anhand eines einzigen Laserstrahls (F) einen ersten (Fo) und einen zweiten (Fe) Laserstrahl zu erzeugen, welche parallel zueinander sind und eine erste räumliche Verschiebung (DS1) aufweisen, welche jeweils einem ersten (o) und einem zweiten (e) spezifischen Polarisationszustand entsprechen, welche orthogonal zueinander sind und in welchen der Laser zu oszillieren in der Lage ist,
wobei die erste doppelbrechende Platte (LB1) und der Hohlraum so konfiguriert sind, dass die erste doppelbrechende Platte einen ersten Bereich (Z1) des Hohlraums (C), in welchem der Laserstrahl (F) ein einziger Strahl ist, von einem zweiten Bereich (Z2), welcher den ersten (Fo) und den zweiten (Fe) Laserstrahl beinhaltet, trennt **dadurch gekennzeichnet, dass** der Hohlraum zudem Folgendes beinhaltet:

- ein Absorptionsmaterial (CA), dessen Absorption mit der optischen Leistung des ihn durchquerenden Strahls zunimmt,
- wobei das aktive Medium (MA) und das Absorptionsmaterial (CA) in dem zweiten Bereich (Z2) angeordnet sind, sodass sie beide durch den ersten (Fo) und den zweiten (Fe) Laserstrahl durchquert werden, welche räumlich verschoben sind.

2. Laser nach Anspruch 1, bei welchem die spezifischen orthogonalen Polarisationszustände linear sind.

3. Laser nach einem der vorhergehenden Ansprüche, dessen Hohlraum (C) zudem eine zweite doppelbrechende Platte (LB2) mit parallelen Seiten beinhaltet, welcher eine zweite optische Achse (OA2) aufweist, welche einen zweiten Winkel ($\beta$) zu der Oszillationsrichtung (A) bildet, wobei der zweite Winkel innerhalb von 10° weder parallel noch rechtwinklig zur Oszillationsrichtung (A) ist,
wobei die zweite doppelbrechende Platte konfiguriert ist, um eine zweite räumliche Verschiebung (DS2) zwischen dem ersten (Fo) und dem zweiten (Fe) Strahl zu erzeugen, welche sich von der ersten räumlichen Verschiebung (DS1) unterscheidet und einen dritten Bereich (Z3) des Laserhohlraums (C) definiert, welche den ersten (Fo) und den zweiten (Fe) Laserstrahl beinhaltet, welche die zweite räumliche Verschiebung aufweisen.

4. Laser nach Anspruch 3, bei welchem das Absorptionsmaterial zwischen der ersten (LB1) und der zweiten (LB2) doppelbrechenden Platte angeordnet ist.

5. Laser nach einem der Ansprüche 3 oder 4, bei welchem das aktive Medium in dem dritten Bereich (Z3) angeordnet ist.

6. Laser nach einem der Ansprüche 3 bis 5, bei welchem die erste (LB1) und die zweite (LB2) Platte identisch und so angeordnet sind, dass der erste ($\alpha$) und der zweite ($\beta$) Winkel symmetrisch zur Oszillationsrichtung (A) sind, wobei die zweite Verschiebung (DS2) dann gleich null ist und der erste (Fo) und der zweite (Fe) Strahl in dem dritten Bereich (Z3) zusammenfallen.

7. Laser nach einem der vorhergehenden Ansprüche, bei welchem der Hohlraum ein ringförmiger Hohlraum ist.

8. Laser nach einem der vorhergehenden Ansprüche, bei welchem die doppelbrechende(n) Platte(n) und das Absorptionsmaterial in der Lage sind, eine identische Rotation um eine zur Oszillationsrichtung (A) rechtwinklige Achse zu bewerkstelligen.

9. Laser nach einem der Ansprüche 3 bis 8, bei welchem die erste und die zweite Platte identisch und so angeordnet sind, dass die erste (OA1) und die zweite (OA2) optische Achse parallel zueinander sind, und welche zudem eine Halbwellenplatte ($L_{\lambda/2}$) beinhaltet, welche zwischen der ersten (LB1) und der zweiten (LB2) doppelbrechenden Platte angeordnet ist.

10. Laser nach einem der vorhergehenden Ansprüche, bei welchem die doppelbrechende(n) Platte(n) und das Absorptionsmittel so aneinandergefügt sind, dass sie eine einzige Komponente (Comp) bilden.

11. Laser nach einem der vorhergehenden Ansprüche, bei welchem der Hohlraum mindestens einen konkaven Spiegel beinhaltet.

12. Laser nach einem der vorhergehenden Ansprüche, bei welchem der erste und der zweite Laserstrahl einen im Wesentlichen identischen mittleren Durchmesser (Dm) aufweisen und die erste und/oder die zweite Verschiebung zwischen 1 % und dem fünffachen Wert des mittleren Durchmessers beträgt/betragen.

## Claims

1. Solid-state laser (10) comprising a cavity (C) which comprises an amplification medium (MA), and which has an oscillation direction (A) of a laser beam (F), the cavity further comprising:

   - a first birefringent plate (LB1) with parallel faces which has a first optical axis (OA1) which forms a first angle ($\alpha$)$\alpha$ with the oscillation direction (A), the first angle being neither parallel with nor perpendicular to the oscillation direction (A) to within 10°,
   in order to generate, from a single laser beam (F), a mutually parallel first laser beam (Fo) and second laser beam (Fe) which have a first spatial offset (DS1), corresponding respectively to a mutually orthogonal first individual polarisation state (o) and second individual polarisation state (e), and at which the laser is capable of oscillating,
   the first birefringent plate (LB1) and the cavity being configured so that the first birefringent plate separates a first zone (Z1) of the cavity (C), in which the laser beam (F) is a single beam, from a second zone (Z2) comprising the first laser beam (Fo) and second laser beam (Fe),
   **characterised in that** the cavity further comprises
   - an absorbent (CA) whose absorption increases with the optical power of the beam passing through it,
   - the active medium (MA) and the absorbent (CA) being arranged in the second zone (Z2) so that they are both passed through by the first beam (Fo) and second beam (Fe) which are spatially offset.

2. Laser according to claim 1, wherein the individual orthogonal polarisation states are linear.

3. Laser according to either of the preceding claims, whose cavity (C) further comprises a second birefringent plate (LB2) with parallel faces which have a second optical axis (OA2) which forms a second angle ($\beta$) with the oscillation direction (A), the second angle being neither parallel with nor perpendicular to the oscillation direction (A) to within 10°, the second birefringent plate being configured to generate a second spatial offset (DS2) between the first beam (Fo) and the second beam (Fe) which is different from the first spatial offset (DS1) and defining a third zone (Z3) of the laser cavity (C) comprising the first laser beam (Fo) and second laser beam (Fe) which have the second spatial offset.

4. Laser according to claim 3, wherein the absorbent is arranged between the first birefringent plate (LB1) and the second birefringent plate (LB2).

5. Laser according to either claim 3 or claim 4, wherein the active medium is arranged in the third zone (Z3).

6. Laser according to any one of claims 3 to 5, wherein the first plate (LB1) and second plate (LB2) are identical and are arranged so that the first angle ($\alpha$) and second angle ($\beta$) are symmetrical relative to the oscillation direction (A), the second offset (DS2) being equal to zero and the first beam (Fo) and second beam (Fe) being aligned in the third zone (Z3).

7. Laser according to any one of the preceding claims, wherein the cavity is an annular cavity.

8. Laser according to any one of the preceding claims, wherein the birefringent plates(s) and the absorbent are capable of carrying out an identical rotation about an axis perpendicular to the oscillation direction (A).

9. Laser according to any one of claims 3 to 8, wherein the first and second plates are identical and arranged so that the first optical axis (OA1) and second optical axis (OA2) are mutually parallel, and further comprising a semi-wave plate ($L_{\lambda/2}$) arranged between the first birefringent plate (LB1) and the second birefringent plate (LB2).

10. Laser according to any one of the preceding claims, wherein the birefringent plate(s) and the absorbent are connected in order to form a single component (Comp).

11. Laser according to any one of the preceding claims, wherein the cavity comprises at least one concave mirror.

12. Laser according to any one of the preceding claims, wherein the first and second laser beams have a substantially identical mean diameter (Dm) and the first and/or second offset is/are between 1% and 5 times the value of the mean diameter.

MA   LB

FP

e

o

OA

A

**FIG.1**

$P_B$

20

21

f

**FIG.2**

FIG.3

FIG.4

**FIG.5**

**FIG.6**

**FIG.7**

FIG.8

FIG.9

**FIG.10**

**FIG.11**

**FIG.12**

**FIG.13**

FIG.14

FIG.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090225800 A

- US 6788715 B

**Littérature non-brevet citée dans la description**

- **M. ALOUINI et al.** Dual tunable wavelength Er,Yb :glass laser for terahertz beat frequency génération. *Photon. Techn. Lett.,* 1998, vol. 10, 1554-1556